# EUROPÄISCHE PATENTSCHRIFT

(11) **EP 4 031 445 B1**
(45) Veröffentlichungstag und Bekanntmachung des Hinweises auf die Patenterteilung: **25.12.2024**
(21) Anmeldenummer: 20780579.7
(22) Anmeldetag: 14.09.2020
(51) Int. Cl.: B64U 101/30, G06V 10/143, G06V 20/17, G06V 20/10, B63G 7/02, F42D 5/04, G06V 10/26

(54) **OPTISCHE MINENDETEKTION IN GERINGER WASSERTIEFE**
OPTICAL MINE DETECTION AT SHALLOW WATER DEPTHS
LA DÉTECTION OPTIQUE DES MINES À FAIBLE PROFONDEUR D'EAU

(30) Priorität: 17.09.2019 DE 102019214139
(43) Veröffentlichungstag der Anmeldung: 27.07.2022
(73) Patentinhaber: ATLAS ELEKTRONIK GmbH, 28309 Bremen (DE); thyssenkrupp AG, 45143 Essen (DE)
(72) Erfinder: HÜCKING, Christian, 28832 Achim (DE)
(74) Vertreter: thyssenkrupp Intellectual Property GmbH
(86) Internationale Anmeldenummer: PCT/EP2020/075589
(87) Internationale Veröffentlichungsnummer: WO 2021/052893

(56) Entgegenhaltungen:
- WO-A1-2015/013543
- DE-A1- 19 633 008
- US-A1- 2015 049 588
- US-A1- 2018 270 474
- US-A1- 2018 343 400
- US-A1- 2019 011 921
- US-A1- 2019 014 760
- US-A1- 2019 266 712
- US-B2- 10 377 485

## Beschreibung

Die Erfindung betrifft ein Verfahren zur optischen Minendetektion in geringer Wassertiefe, insbesondere im Flachwasserbereich.

Seeminen sind nicht nur eine Gefahr für die Schifffahrt, sondern auch für zahlreiche militärische und zivile Aktivitäten an Küsten und Meeren. Sowohl historisch als auch aktuell werden verschiedenste Typen von Seeminen in unterschiedlichen Wassertiefen ausgebracht. Ihre Räumung ist ein zeitaufwendiges, kostenintensives und nicht zuletzt auch risikoreiches Unterfangen, dessen Aufwand den der anfänglichen Platzierung der Minen um den Faktor 200 überschreiten kann. Derzeit gibt es diverse Methoden zur Detektion von Seeminen, wobei in der Regel eine Kombination mehrerer Verfahren notwendig ist, um möglichst verlässliche Indikatoren ableiten zu können. Neue Verfahren, die eine flächendeckende und weitgehend automatisierte Minenerkennung ermöglichen, können hier einen wichtigen Beitrag leisten bzw. bestehende Methoden ergänzen und unterstützen.

In den letzten zehn Jahren haben unbemannte Luftfahrzeuge, sog. Unmanned Aerial Vehicles (UAVs), häufig unter dem eher landläufigen Begriff "Drohne" bekannt, eine immer wichtigere Rolle für zivile und militärische Einsätze eingenommen. Überwachungs- und Aufklärungsmissionen sowie die Beurteilung von Kampfschäden sind nur zwei Beispiele für eine Vielzahl von Anwendungen, bei denen die immer leistungsfähigeren UAVs von großem Nutzen sind. In diesem Zusammenhang wird seitens der Forschung oft die Tatsache betont, dass UAVs die Sicherheit und Effizienz bei der Durchführung von Einsätzen und Operationen deutlich erhöhen. UAV bezeichnet dabei jedoch lediglich die Plattform als solche, die erst in Kombination mit geeigneter Sensorik wie bildgebenden und/oder spektralen Messinstrumenten tatsächlich relevante Informationen liefern kann.

Bei der Diskussion zur Erkennung von Minen muss klar zwischen See- und Landminen unterschieden werden. Für letztere werden derzeit vor allem Spürhunde, Minenräumpanzer oder Metalldetektoren eingesetzt.

Die Detektion von Seeminen ist im Vergleich dazu deutlich komplexer, so dass die an Land eingesetzten Methoden hier nicht oder nur sehr eingeschränkt nutzbar sind. So kommen bislang vor allem akustische Verfahren (Sonar) zum Einsatz, wobei die entsprechenden Sensoren von verschiedenen Plattformen getragen können, beispielsweise und insbesondere Minenjagdboote, ferngesteuerte oder autonome unbemannte Oberflächenfahrzeuge (USV), Autonomous Underwater Vehicles (AUVs) oder Remotely Operated Vehicles (ROVs).

In jüngster Zeit werden jedoch auch zunehmend UAVs als Trägersysteme zur Detektion von Land- und Seeminen verwendet. Diese sind in der Regel unbemannte Hubschrauber, die ein Unterwassersonar ziehen und, ähnlich den Unterwasser- und Oberflächensystemen, vorprogrammierten geodätisch geplante Routen folgen. In dieser Kombination wird das UAV also weniger als tatsächliches Trägersystem, sondern lediglich als Antrieb oder Zugmaschine verwendet, während die Sensorik selbst weiterhin unter Wasser arbeitet.

Seeminen sind Sprengsätze von unterschiedlicher Form, deren Abmessungen von ca. 50 cm bis fast 3 m variieren und die von ca. 50 kg bis über 1000 kg Sprengstoff enthalten können. Abgesehen von Ausmaß und Sprengkraft lassen sich Minen nach ihrer Einsatzart, ihrer Lage in der Wassersäule und der Art ihrer Aktivierung bzw. Detonation weiter kategorisieren. So können sie auf unterschiedliche Arten im Wasser platziert werden. Es gibt Grundminen, Ankertauminen und Treibminen. Ankertauminen können tief oder hochstehend sein, das heißt, sie sind nahe am Boden oder nahe der Oberfläche. Treibminentreiben entweder frei an oder unter der Wasseroberfläche und folgen dabei den Einflüssen von Wasserströmung und Wind oder sind ortsfest angebunden. Obwohl frei treibende Treibminen seit über 70 Jahren völkerrechtlich verboten sind, werden sie von einigen Ländern noch immer für Abwehr- oder Offensivstrategien in Konflikten eingesetzt.

Grundminen verbleiben nach der Ausbringung auf dem Meeresboden. Da sie an Ort und Stelle verbleiben sollen, werden sie mit größeren Sprengladungen (ca. 1000 kg) bestückt. Häufig werden sie zudem teilweise oder auch vollständig mit Sediment bedeckt, teils auch mit der konkreten Intention, ihre Entdeckung zu erschweren. Damit die Explosionskraft der Mine den Schiffsrumpf in der Nähe der Wasseroberfläche erfassen kann, werden Grundminen meist in relativ flachem Wasser (weniger als 50 m) eingesetzt.

Ankertauminen wiederum müssen Auftrieb haben, damit sie in einer bestimmten Tiefe eingesetzt werden können. Dabei dient ein Gewicht (Ankerstuhl) am Meeresgrund als Befestigung, während die Mine selbst aufschwimmt und, bedingt durch die Länge der Ankerkette, in der gewünschten Tiefe "stehen" kann. Da Ankertauminen dichter am Zielobjekt stehen und um den erforderlichen Auftrieb zu gewährleisten, sind Ankertauminen in der Regel mit deutlich weniger Sprengstoff gefüllt als Grundminen.

Die sonarbasierten Verfahren zur Detektion von Seeminen in größeren Wassertiefen sind inzwischen recht ausgereift und ermöglichen auch eine große Flächenabdeckung pro Zeiteinheit. Minen nahe der Wasseroberfläche können mit diesen Verfahren schwer detektiert werden. Speziell in Flachwasser sind akustische Verfahren aufgrund der Umgebungsgeräusche und Reflexionen schwer anwendbar. Auch ist die Erreichbarkeit für konventionelle Minenjagdschiffe normalerweise nicht gegeben. Daher müssen für diese Aufgaben andere Vorgehensweisen verwendet werden.

Aus der EP 148 704 B1 ist ein Überwachungssystem mithilfe eines Drohnenflugkörper zur Ortsbestimmung eines Zieles bekannt.

Aus der DE 196 33 008 A1 ist ein Verfahren zur Detektion von Treibminen bekannt.

Aus der EP 0 858 051 B1 ist ein Verfahren zum Segemntieren eines digitalen Bildes bekannt.

Aus der DE 10 2004 062 124 B3 ist eine Einrichtung und ein Verfahren zum Tracken eines Unterwasserfahrzeugs bekannt.

Aus der EP 0 148 704 B1 ist ein Überwachungssystem mithilfe eines Drohnenflugkörpers zur Ortsbestimmung eines Zieles bekannt.

Aus der US 2019/011921 A1 ist ein System und ein Verfahren zur interactiven Steuerung und Kontrolle von UAVs bekannt.

Aus der WO 2015/013543 A1 sind bathymetrische Techniken unter Verwendung von Satellitenbildern bekannt.

Aus der US 2019/014760 A1 ist ein Verfahren und Geräte zur Objektdetektion in unbemannten Flugzeugen bekannt.

Aus der US 2018/343400 A1 ist ein sphärischer Infrarotsender bekannt.

Aus der US 10 377 485 B2 ist ein System und ein Verfahren zur automatischen Untersuchung von Oberflächen bekannt.

Aus der US 2015/049588 A1 ist ein Verfahren zum Aufspüren von Schiffsminen und ein Schiffsminendetektionssystem bekannt.

Aus der US 2018/270474 A1 ist ein optisches Abbildungssystem und ein Verfahren dazu bekannt.

Aus der US 2019/266712 A1 ist ein System und ein Verfahren zur Abbildung von Unterwasserumgebungen mittels flüssigkeitslinsen bekannt.

Aufgabe der Erfindung ist es, ein Verfahren bereitzustellen, mit welchem Minen in geringer Wassertiefe, insbesondere im Flachwasser, schnell und zuverlässig lokalisiert werden können.

Gelöst wird diese Aufgabe durch das Verfahren mit den in Anspruch 1 angegebenen Merkmalen. Vorteilhafte Weiterbildungen ergeben sich aus den Unteransprüchen, der nachfolgenden Beschreibung sowie den Zeichnungen.

Das erfindungsgemäße Verfahren zur Detektion von Minen in geringer Wassertiefe unter der Wasseroberfläche weist die folgenden Schritte auf, wobei geringe Wassertiefe der Bereich mit einer Wassertiefe von bis zu 50 m ist:
a) Überfliegen einer Verdachtsregion mit einem Luftfahrzeug, wobei als Luftfahrzeug ein Luftfahrzeug mit wenigstens einer ersten optischen Erfassungsvorrichtung ausgewählt wird,
b) Erfassen einer Bildserie, wobei die Bildserie 3 bis 100 Einzelbilder aufweist, wobei wenigstens ein Bildpunkt spektral aufgelöst erfasst wird,
c) Durchführung einer Störfaktoranalyse der Bildserie zur Beseitigung von Oberflächeneffekten,
d) Durchführung einer Kontrastanpassung der Einzelbilder,
e) Durchführung einer Bildsegmentierung,
f) Selektion von Bildsegmenten mit einer vorgegebenen Größe, insbesondere von 0,3 bis 3 m, sowie einer vorgegebenen Form, insbesondere rund oder rechteckig,
g) Identifizieren der Position einer potentiellen Mine,

wobei die spektrale Information des Sonnenlichts und die spektrale Information des reflektierten Lichtes erfasst wird,
wobei zwischen Schritt d) und Schritt e) aus der spektralen Information die Wassertiefe errechnet wird.

Geringe Wassertiefe im Sinne der Erfindung ist der Bereich mit einer Wassertiefe von bis zu 50 m, besonders bevorzugt von bis zu 30 m. Besonders, bevorzugt betrifft die Erfindung ein Verfahren zur Detektion von Minen im Flachwasser, wobei der Grund bis zu 50 m, besonders bevorzugt bis zu 30 m, unter der Wasseroberfläche liegt. Hierbei geht der Flachwasserbereich bis an das Land und somit beispielsweise an einem Strand bei abnehmender Wassertiefe praktisch bis zur Tiefe 0, was dem Brandungsbereich entsprechen würde. Das Verfahren erlaubt somit nicht nur die Detektion von Minen, die an der Oberfläche sind beziehungsweise die Wasseroberfläche wenigstens teilweise durchdringen, sondern vor allem auch die Detektion von vollständig mit Wasser bedeckten Minen, insbesondere Grundminen und Ankertauminen.

In Schritt a) wird in einer ersten bevorzugten Ausführungsform eine flächenauflösende erste optische Erfassungsvorrichtung ausgewählt, beispielsweise ein CMOS oder CCD Sensor.

In Schritt a) wird in einer zweiten bevorzugten Ausführungsform eine flächenauflösende erste optische Erfassungsvorrichtung ausgewählt, beispielsweise ein CMOS oder CCD Sensor, wobei die erste optische Erfassungsvorrichtung einen spaltförmigen Einlass und ein dispersives oder diffraktives Element hinter dem spaltförmigen Einlass aufweist, wobei die brechende beziehungsweise beugende Wirkung senkrecht zur Längsrichtung des Spalts angeordnet ist. Vorteil dieser Ausführungsform ist eine eindimensionale Erfassung, welche zusammen mit der Fortbewegung des Luftfahrzeugs, welche vorzugsweise senkrecht zur Längsrichtung des Spalts erfolgt, eine flächige Erfassung ermöglicht. Gleichzeitig kann die spektrale Information in der zweiten Dimension auf dem Sensor erfasst werden. Besonders bevorzugt ist das diffraktive Element ein Gitter.

In Schritt a) wird in einer dritten bevorzugten Ausführungsform eine sowohl flächig als auch spektrale auflösen erste optische Erfassungsvorrichtung ausgewählt. Beispiel hierfür ist ein Spektrometer S 185 der Firma Cubert mit einer Auflösung von 50 × 50 Pixeln und einer spektralen Auflösung von 450 nm bis 1000 nm.

In Schritt a) wird in einer vierten bevorzugten Ausführungsform ein Luftfahrzeug mit einer flächig erfassenden ersten optischen Erfassungsvorrichtung und einer zweiten optischen Erfassungsvorrichtung ausgewählt, wobei als zweite optische Erfassungsvorrichtung ein Spektrometer ausgewählt wird. Besonders bevorzugt ist die zweite optische Erfassungsvorrichtung derartig angeordnet, dass die spektrale Information eines Bildbereiches der ersten optischen Erfassungsvorrichtung erfasst werden kann.

In einer weiteren Ausführungsform der Erfindung werden in Schritt b) 15 bis 40 Einzelbilder, bevorzugt 20 bis 30 Einzelbilder, erfasst. Bevorzugt erfolgt die Erfassung der Einzelbilder in einem Zeitraum von 10 bis 30 Sekunden.

Oberflächeneffekte, welche bei der Störfaktoranalyse entfernt werden sollen, sind zum Beispiel Reflexionen oder auch Effekte durch Brandung, beispielsweise Schaum und Gischtbildung.

Beispielsweise und insbesondere erfolgt die Durchführung der Störfaktoranalyse der Bildserie zur Beseitigung von Oberflächeneffekten durch einen Vergleich der Einzelbilder der Bildserie. Da sich die Wasseroberfläche innerhalb der Aufnahmezeit stetig bewegt, verschieben sich in jedem einzelnen Bild der Serie die (extrem hellen) Flächen mit Reflexion des Sonnenlichts. Durch die Auswahl des jeweils dunkelsten Pixels der Bildreihe ist es dann möglich, die Reflexionen zu minimieren oder sogar ganz zu eliminieren. Durch diesen multitemporalen Ansatz mit anschließender Minimum-Filterung ist das finale Bild nahezu reflexionsfrei. Über ähnliche Verfahren können beispielsweise Störobjekte, die sich während der Aufnahmen durch das Bild bewegen, entfernt werden.

Da dieses Vorgehen regelmäßig den Kontrast reduziert ist eine Durchführung des Schritts d) erst nach dem Schritt c) vorteilhaft. Theoretisch könnten diese beiden Schritte auch in umgekehrter Reihenfolge durchgeführt werden. Alternativ ist auch eine erste Kontrastanpassung der Einzelbilder vor Schritt c) und eine Kontrastanpassung des Bildes in Schritt d) möglich.

Beispielsweise wird in Schritt d) die Kontrastanpassung über eine Minimum-Maximum-Streckung durchgeführt. Dieses kann über das Gesamtbild oder über einzelne Bildbereiche erfolgen. Erfolgt die Kontrastanpassung über Bildbereiche, so werden Bildbereiche vorzugsweise so gewählt, dass der Bildbereich mindestens Faktor zwei größer als die größte Längsausdehnung einer zu erwartenden Mine gewählt wird. Selbstständig sind dem Fachmann der Bildbearbeitung weitere Kontrastanpassungsmethoden bekannt, welche ebenfalls verwendet werden können.

Die Bildsegmentierung in Schritt e) werden insbesondere Farben, Texturen und/oder Kontraste zu Regionen mit ähnlichen Eigenschaften zusammengefasst und von Nachbarregionen mit anderen Eigenschaften unterschieden. Lediglich beispielsweise sei der Felzenszwalb-Huttenlocher-Algorithmus genannt. Bei diesem kanten-orientierten Verfahren werden benachbarte Pixel auf ihre Merkmale wie Farbe oder Helligkeit hin untersucht und verglichen. Ähnliche Pixel werden dann zu Regionen zusammengefasst, wobei die Wahl der Parameter für diesen Algorithmus das Ergebnis maßgeblich beeinflusst.

In Schritt f) erfolgt nun ein Vergleich gefundener Bildsegmente mit vorgegebenen Formen und Größen, welche Minen entsprechen würden. Beispielsweise würden Anti-Invasions-Minen eine runde Form und einen Durchmesser von etwa 1 m aufweisen. Grundminen weisen oft eine zylindrische Form auf, wobei dieser regelmäßig einen Durchmesser von 50 cm bis 60 cm, insbesondere von 533 mm, und eine Länge von 1 m bis 2 m aufweisen. Diese würden somit als Rechteck mit einer entsprechenden Kantenlänge auftauchen. Form und Größe sind somit durch die existierenden Minenform korreliert.

In Schritt g) erfolgt dann die Identifizierung einer potentiellen Mine über das erfasste optische Bild im Bereich des identifizierten Bildsegments. Aus den Bilddaten kann auch die exakte Position der Mine bestimmt werden und an eine Einheit zur Minenbekämpfung weitergegeben werden.

Erfindungsgemäß wird in Schritt b) wenigstens ein Bildpunkt spektral aufgelöst erfasst. Beispielsweise werden wenigstens 20 spektral unterschiedliche Informationen, bevorzugt wenigstens 50 spektral unterschiedliche Informationen erfasst. Spektrale unterschiedliche Informationen sind in diesem Sinne Informationen, welche Intensitäten in verschiedenen Bereichen des Spektrums repräsentieren. Im einfachsten Fall können verschiedene Filter verschiedene spektrale unterschiedliche Informationen erfassen. Einfachstes Beispiel hierfür sind Sensoren in handelsüblichen Kameras welche ein roten, einen grünen und einen blauen Bereich des Spektrums erfassen, wobei entsprechende Filter vor entsprechenden Pixeln des Sensors angeordnet sind. Um eine höhere Auflösung zu erreichen können theoretisch mehrere Filter mit mehreren Subpixeln verwendet werden, was jedoch technisch sehr aufwendig ist. Bevorzugt wird hierfür ein diffraktives Element, beispielsweise ein Gitter, eingesetzt. Hierbei ist in einfachen Spektrometer durch die kostengünstige Bauweise die Auflösung teilweise beschränkt, sodass lediglich spektrale Informationen mit einer Auflösung von 5 nm bis 10 nm aufgelöst werden können. Als spektrale Information ist in diesem Fall die Intensität in voneinander getrennten spektralen Bereichen zu verstehen. Die spektrale Information wird beispielsweise und bevorzugt im Bereich von 200 nm bis 10 µm, bevorzugt von 200 nm bis 3 µm, besonders bevorzugt von 300 nm bis 1,1 µm erfasst. Bevorzugt wird die spektrale Information wenigstens im Bereich von 400 nm bis 700 nm erfasst. Bevorzugt beträgt die maximale spektrale Auflösung 0,5 nm, besonders bevorzugt beträgt die maximale spektrale Auflösung 1 nm.

In einer weiteren Ausführungsform der Erfindung weist das Luftfahrzeug eine monochromatische Lichtquelle, insbesondere einen Laser, auf. Die Lichtquelle projiziert wenigstens zeitweise einen Lichtstrahl in das durch die erste optische Erfassungsvorrichtung erfasste Gebiet. Die zurückgestreute Strahlung wird zur spektralen Kalibrierung der ersten optischen Erfassungsvorrichtung verwendet.

Erfindungsgemäß wird zwischen Schritt d) und Schritt e) aus der spektralen Information die Wassertiefe errechnet. Eine wichtige Grundeigenschaft von Licht ist, dass unterschiedliche Wellenlängen auch verschiedene Eindringtiefen in den Wasserkörper aufweisen. Dabei gilt der Grundsatz, dass Licht mit kürzeren Wellenlängen (z.B. blau) tiefer in die Wassersäule eindringen kann als solches mit längeren (z.B. rot). Eine Ausnahme bilden Gewässer, die reich an Absorbern wie etwa Gelbstoff sind, in denen grünes Licht (mittlere Wellenlänge) ein größere Eindringtiefe aufweist als blaues. Optische Sensoren messen die Rückstrahlung aus dem Wasser, also jenes Licht, das von der Wasseroberfläche, den Partikeln innerhalb der Wassersäule oder dem See-/Meeresgrund zum Sensor zurückgeworfen wird. Die Wassertiefe, aus der das Signal kommt, liegt dabei in etwa bei der halben Eindringtiefe, da das Licht den Weg durch die Wassersäule zweimal zurücklegen muss (erst nach unten, danach zurück nach oben zum Sensor). Die tatsächliche Eindringtiefe des Sonnenlichts ist vornehmlich von den Wasserinhaltsstoffen, also den im Wasser enthaltenen Absorbern (z.B. Gelbstoff) und Streuern (z.B. Sedimentpartikel oder Phytoplankton) abhängig. Dadurch ist sie einer räumlichen und zeitlichen Dynamik unterworfen und kann je nach Region sehr unterschiedlich ausfallen. Mit zunehmenden Konzentrationen der absorbierenden und streuenden Wasserinhaltsstoffe verringert sich die Sichttiefe. Für die Erkennung des Seegrundes oder von Objekten unter Wasser hat das zur Folge, dass der Einsatz optischer Verfahren auf die halbe maximale Eindringtiefe des Sonnenlichts begrenzt ist. Die Wassertiefe kann somit anhand der Streuungs- und Absorptionseigenschaften des Wassers errechnet werden, insbesondere mit Hilfe eines physikalischen Modells zur Erstellung und Inversion von Wasserspektren.

Die Ermittlung der Wassertiefe hat einen weiteren positiven Effekt. Vor einer Anlandung kann der betreffende Bereich nicht nur auf Anti-Invasions-Minen untersucht werden, sondern auch das Tiefenprofil aktuell aufgenommen werden. Dieses kann helfen, um eine Anlandung konkret zu planen, insbesondere Positionen festzulegen, an welchen Fahrzeuge anlanden können. Gerade in Flachwasser kann zum einen durch Sedimentbewegung Kartenmaterials schnell veraltern. Zum anderen können auch Hindernisse unerkannt in das Flachwasser eingebracht worden zu sein, um ein Anlanden zu erschweren oder verhindern.

In einer weiteren Ausführungsform der Erfindung erfolgt in Schritt e) die Bildsegmentierung ausschließlich anhand der Wassertiefe oder aus einer Kombination der Wassertiefe und der optischen Information.

Erfindungsgemäß wird die spektrale Information des Sonnenlichts und die spektrale Information des reflektierten Lichtes erfasst. Hierzu wird vorzugsweise in Schritt a) ein Luftfahrzeug ausgewählt nicht eine weitere optische Erfassungsrichtung aufweist, welche bevorzugt in die entgegengesetzte Richtung der Erfassungsrichtung der ersten optischen Erfassungsvorrichtung ausgerichtet ist. Auf diese Weise ist es leicht möglich spektrale Unterschiede, welche zum Beispiel durch unterschiedliche Bewölkungen oder andere Wettereinflüsse sowie Tageszeiten und dergleichen entstehen, herauszurechnen.

In einer weiteren Ausführungsform der Erfindung erfasst das Luftfahrzeug die Geoposition zum Zeitpunkt der Bilderfassung und ordnet die Geoposition dem Bild zu. Beispiel Versuchs insbesondere kann die Erfassung der Geoposition mithilfe eines Satellitennavigationssystems GNNS (GPS, Galileo, GLONASS, Beidou) erfolgen.

In einer weiteren Ausführungsform der Erfindung wird die optische Erfassungsrichtung in einem Winkel von weniger als 20° zur Strahlrichtung des direkten Sonnenlichts ausgerichtet. Damit steht bevorzugt die Sonne "im Rücken" der ersten optischen Erfassungsvorrichtung. Artefakt und Störlicht werden somit minimiert.

In einer weiteren Ausführungsform der Erfindung ist ein Polarisationsfilter drehbar vor der ersten optischen Erfassungsvorrichtung angeordnet. Hierbei wird (insbesondere für eine konstante Flugrichtung) der Polarisationsfilter so rotiert, dass die durch die erste optische Erfassungsvorrichtung erfasste Licht minimiert ist. In dieser Position sollte die Reflexion auf der Wasseroberfläche miniert und somit eine optimale Erfassung von Objekten unter der Wasseroberfläche möglich sein.

In einer weiteren Ausführungsform der Erfindung wird das Verfahren auf der nördlichen Hemisphäre zwischen dem 1. Oktober und dem 30. April sowie zwischen 10:00 Uhr und 15:00 Uhr durchgeführt. Optimal ist eine Erfassung, wenn die Sonne am höchsten steht, somit während der Mittagszeit. Auf der anderen Seite ist eine Erfassung im Sommer oftmals durch Algenblüte erschwert sodass Herbst, Winter und Frühling bevorzugt sind.

In einer weiteren Ausführungsform der Erfindung wird als Luftfahrzeug ein unbemanntes Luftfahrzeug ausgewählt. Besonders bevorzugt handelt es sich um ein autonomes unbemanntes Luftfahrzeug.

In einer weiteren Ausführungsform der Erfindung wird als Luftfahrzeug ein Hubschrauber ausgewählt wird, wobei der Hubschrauber zusätzlich ein unbemanntes Unterwasserfahrzeug aufweist. Nach Identifikation einer Mine werden die folgenden Schritte durchgeführt:
u) Absetzen des unbemannten Unterwasserfahrzeugs durch den Hubschrauber,
v) Anfahren der Mine durch das unbemannte Unterwasserfahrzeug,
w) Bekämpfen der Mine durch das unbemannte Unterwasserfahrzeug.

In einer weiteren Ausführungsform der Erfindung wird als Luftfahrzeug ein unbemanntes Luftfahrzeug (UAV) ausgewählt wird, wobei das UAV zusätzlich ein unbemanntes Unterwasserfahrzeug aufweist. Nach Identifikation einer Mine werden die folgenden Schritte durchgeführt:
u') Absetzen des unbemannten Unterwasserfahrzeugs durch das UAV,
v') Anfahren der Mine durch das unbemannte Unterwasserfahrzeug,
w') Bekämpfen der Mine durch das unbemannte Unterwasserfahrzeug.

Nachfolgend ist das erfindungsgemäße Verfahren anhand eines in den Zeichnungen dargestellten Ausführungsbeispiels näher erläutert.
- Fig. 1: schematische Darstellung der optische Minendetektion im Flachwasserbereich
- Fig. 2: Eindringtiefe in Abhängigkeit von der Wellenlänge
- Fig. 3: Flussdiagramm

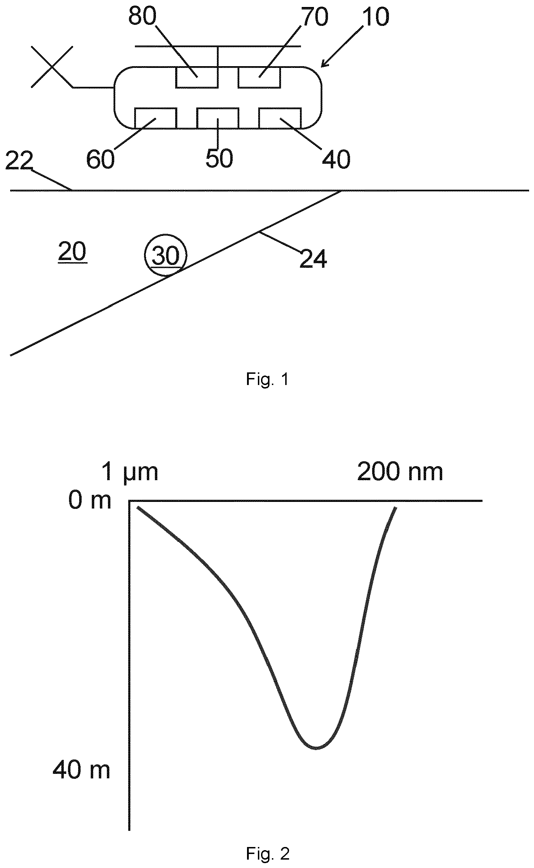

In Fig. 1 ist stark schematisch ein Küstenbereich dargestellt. Ein Luftfahrzeug 10 überfliegt das Flachwasser 20. Das Flachwasser 20 zeichnen sich dadurch aus, dass der Abstand zwischen der Wasseroberfläche 22 und dem Meeresboden 24 weniger als 50 m beträgt.

Das Luftfahrzeug 10 weist eine erste optische Erfassungsvorrichtung 40 auf, beispielsweise eine Kamera zur flächigen Erfassung des Flachwasserbereichs. Weiter weist das Luftfahrzeug 10 eine zweite optische Erfassungsvorrichtung 50 auf, beispielsweise ein Spektrometer, welches die spektrale Information, insbesondere des Bildmittelpunktes des durch die erste optische Erfassungsrichtung 40 erfassten Bildes, erfasst. Um Einflüsse, zum Beispiel des Wetters, auszuschließen weist das Luftfahrzeug 10 eine dritte optische Erfassungsvorrichtung 70 auf, welche nach oben gerichtet ist und so spektrale Charakteristik des einfallenden Sonnenlichts erfassen kann.

Weiter weist das Luftfahrzeug 10 ein GNNS-Sensor 80 auf. So können jedem erfassten Bild und jedem erfassten Spektrum direkt die Geopositionen zugeordnet werden.

Weiter weist das Wasserfahrzeug 10 ein unbemanntes Unterwasserfahrzeug 60 auf. Bei dem unbemannten Unterwasserfahrzeug 60 handelt es sich um ein unbemanntes Unterwasserfahrzeug 60 zur Bekämpfung von Minen, beispielsweise einen Seefuchses.

Wird mit der ersten optischen Erfassungsvorrichtung 40 und oder der zweiten optische Erfassungsvorrichtung 50 eine Mine 30 detektiert und lokalisiert, so kann das Luftfahrzeug 10 das unbemannte Unterwasserfahrzeug 60 absetzen. Das unbemannte Unterwasserfahrzeug 60 kann dann die Mine 30 weiter untersuchen und gegebenenfalls bekämpfen.

Fig. 2 zeigt grob und schematisch, wie sich die Eindringtiefe von Licht unterschiedlicher Wellenlänge verhält. Eine maximale Eindringtiefe wird im Blau-Grün-Bereich erreicht und liegt je nach Einstrahlintensität (insbesondere Sonnenhelligkeit) und Detektorempfindlichkeit im Bereich von 20 bis 50 m, sofern keine abschwächen Effekte, insbesondere Trübung durch Schwebstoffe, Absorption durch Algen oder dergleichen die Lichtausbreitung unter Wasser negativ beeinflussen. Im ungünstigen Fall, beispielsweise während einer starken Algenblüte, einen effektiven Wert unter 1 m sinken. Prinzipiell ist aber erkennbar, dass an der spektralen Verschiebung die Tiefe eines Objektes erkannt werden kann.

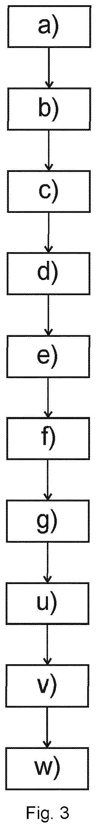

In Fig. 3 ist das Verfahren in einem Flussdiagramm dargestellt.
a) Überfliegen einer Verdachtsregion mit einem Luftfahrzeug, wobei als Luftfahrzeug ein Luftfahrzeug mit wenigstens einer ersten optischen Erfassungsvorrichtung ausgewählt wird,
b) Erfassen einer Bildserie, wobei die Bildserie 3 bis 100 Einzelbilder aufweist,
c) Durchführung einer Störfaktoranalyse der Bildserie zur Beseitigung von Oberflächeneffekten,
d) Durchführung einer Kontrastanpassung der Einzelbilder,
e) Durchführung einer Bildsegmentierung,
f) Selektion von Bildsegmenten mit einer vorgegebenen Größe, insbesondere von 0,3 bis 3 m, sowie einer vorgegebenen Form, insbesondere rund oder rechteckig,
g) Identifizieren der Position einer potentiellen Mine,
u) Absetzen des unbemannten Unterwasserfahrzeugs durch den Hubschrauber,
v) Anfahren der Mine durch das unbemannte Unterwasserfahrzeug,
w) Bekämpfen der Mine durch das unbemannte Unterwasserfahrzeug.

### Bezugszeichen

- 10: Luftfahrzeug
- 20: Flachwasser
- 22: Wasseroberfläche
- 24: Meeresboden
- 30: Mine
- 40: erste optische Erfassungsvorrichtung
- 50: zweite optische Erfassungsvorrichtung
- 60: unbemanntes Unterwasserfahrzeug
- 70: dritte optische Erfassungsvorrichtung
- 80: GNNS-Sensor

## Patentansprüche

1. Verfahren zur Detektion von Minen (30) in geringer Wassertiefe unter der Wasseroberfläche, wobei geringe Wassertiefe der Bereich mit einer Wassertiefe von bis zu 50 m ist, wobei das Verfahren die folgenden Schritte aufweist:
a) Überfliegen einer Verdachtsregion mit einem Luftfahrzeug (10), wobei als Luftfahrzeug (10) ein Luftfahrzeug (10) mit wenigstens einer ersten optischen Erfassungsvorrichtung (40) ausgewählt wird,
b) Erfassen einer Bildserie, wobei die Bildserie 3 bis 100 Einzelbilder aufweist, wobei wenigstens ein Bildpunkt spektral aufgelöst erfasst wird,
c) Durchführung einer Störfaktoranalyse der Bildserie zur Beseitigung von Oberflächeneffekten,
d) Durchführung einer Kontrastanpassung der Einzelbilder,
e) Durchführung einer Bildsegmentierung,
f) Selektion von Bildsegmenten mit einer vorgegebenen Größe und einer vorgegebenen Form,
g) Identifizieren der Position einer potentiellen Mine (30),
**dadurch gekennzeichnet, dass** die spektrale Information des Sonnenlichts und die spektrale Information des reflektierten Lichtes erfasst wird, wobei zwischen Schritt d) und Schritt e) aus der spektralen Information die Wassertiefe errechnet wird.

2. Verfahren nach Anspruch 1, **dadurch gekennzeichnet, dass** in Schritt b) 15 bis 40 Einzelbilder erfasst werden.

3. Verfahren nach einem der vorstehenden Ansprüche, **dadurch gekennzeichnet, dass** in Schritt e) die Bildsegmentierung ausschließlich anhand der Wassertiefe oder aus einer Kombination der Wassertiefe und der optischen Information erfolgt.

4. Verfahren nach einem der vorstehenden Ansprüche, **dadurch gekennzeichnet, dass** das Luftfahrzeug (10) die Geoposition zum Zeitpunkt der Bilderfassung erfasst und die Geoposition dem Bild zuordnet.

5. Verfahren nach einem der vorstehenden Ansprüche, **dadurch gekennzeichnet, dass** die optische Erfassungsrichtung in einem Winkel von weniger als 20° zur Strahlrichtung des direkten Sonnenlichts ausgerichtet wird.

6. Verfahren nach einem der vorstehenden Ansprüche, **dadurch gekennzeichnet, dass** das Verfahren auf der nördlichen Hemisphäre zwischen dem 1. Oktober und dem 30. April sowie zwischen 10:00 Uhr und 15:00 Uhr durchgeführt wird.

7. Verfahren nach einem der vorstehenden Ansprüche, **dadurch gekennzeichnet, dass** als Luftfahrzeug (10) ein unbemanntes Luftfahrzeug (10) ausgewählt wird.

8. Verfahren nach einem der Ansprüche 1 bis 7, **dadurch gekennzeichnet, dass** als Luftfahrzeug (10) ein Hubschrauber ausgewählt wird, wobei der Hubschrauber zusätzlich ein unbemanntes Unterwasserfahrzeug (60) aufweist, wobei nach Identifikation einer Mine (30) die folgenden Schritte durchgeführt werden:
u) Absetzen des unbemannten Unterwasserfahrzeugs (60) durch den Hubschrauber,
v) Anfahren der Mine (30) durch das unbemannte Unterwasserfahrzeug (60),
w) Bekämpfen der Mine (30) durch das unbemannte Unterwasserfahrzeug (60).

## Claims

1. A method for detecting mines (30) in shallow water depth below the water surface, wherein shallow water depth is the area with a water depth of up to 50 metres, the method comprising the following steps:
a) Flying over a suspected region with an aircraft (10), wherein the aircraft (10) selected is an aircraft (10) with at least one first optical detection device (40),
b) Capturing an image series, wherein the image series comprises 3 to 100 individual images, wherein at least one pixel is captured with spectral resolution,
c) Carrying out an interference factor analysis of the image series to eliminate surface effects,
d) Perform a contrast adjustment of the individual images,
e) Carrying out an image segmentation,
f) Selection of image segments with a predefined size and shape,
g) Identify the position of a potential mine (30),
**characterised in that** the spectral information of the sunlight and the spectral information of the reflected light is recorded, the water depth being calculated from the spectral information between step d) and step e).

2. Method according to claim 1, **characterised in that** 15 to 40 individual images are captured in step b).

3. Method according to one of the preceding claims, **characterised in that** in step e) the image segmentation is carried out exclusively on the basis of the water depth or from a combination of the water depth and the optical information.

4. Method according to one of the preceding claims, **characterised in that** the aircraft (10) detects the geoposition at the time of image acquisition and assigns the geoposition to the image.

5. Method according to one of the preceding claims, **characterised in that** the optical detection direction is aligned at an angle of less than 20° to the beam direction of the direct sunlight.

6. Method according to one of the preceding claims, **characterised in that** the method is carried out in the northern hemisphere between 1 October and 30 April and between 10:00 and 15:00.

7. Method according to one of the preceding claims, **characterised in that** an unmanned aerial vehicle (10) is selected as the aircraft (10).

8. A method according to any one of claims 1 to 7, **characterised in that** a helicopter is selected as the aircraft (10), the helicopter additionally comprising an unmanned underwater vehicle (60), wherein after identification of a mine (30) the following steps are carried out:
u) Deployment of the unmanned underwater vehicle (60) by the helicopter,
v) Approach of the mine (30) by the unmanned underwater vehicle (60),
w) Fighting the mine (30) with the unmanned underwater vehicle (60).

## Revendications

1. Méthode de détection des mines (30) dans les eaux peu profondes sous la surface de l'eau, les eaux peu profondes étant la zone dont la profondeur est inférieure ou égale à 50 mètres, la méthode comprenant les étapes suivantes :
a) survoler une région suspecte avec un aéronef (10), l'aéronef (10) sélectionné étant un aéronef (10) doté d'au moins un premier dispositif de détection optique (40),
b) Capture d'une série d'images, dans laquelle la série d'images comprend de 3 à 100 images individuelles, dans laquelle au moins un pixel est capturé avec une résolution spectrale,
c) Réalisation d'une analyse des facteurs d'interférence de la série d'images afin d'éliminer les effets de surface,
d) Effectuer un réglage du contraste des images individuelles,
e) Effectuer une segmentation de l'image,
f) Sélection de segments d'image ayant une taille et une forme prédéfinies,
g) Identifier la position d'une mine potentielle (30),
**caractérisé par** l'enregistrement des informations spectrales de la lumière solaire et des informations spectrales de la lumière réfléchie, la profondeur de l'eau étant calculée à partir des informations spectrales entre l'étape d) et l'étape e).

2. Méthode selon la revendication 1, **caractérisée par le fait que** 15 à 40 images individuelles sont capturées à l'étape b).

3. Procédé selon l'une des revendications précédentes, **caractérisé par le fait qu'à** l'étape e), la segmentation de l'image est effectuée exclusivement sur la base de la profondeur de l'eau ou à partir d'une combinaison de la profondeur de l'eau et de l'information optique.

4. Procédé selon l'une des revendications précédentes, **caractérisé par le fait que** l'aéronef (10) détecte la géoposition au moment de l'acquisition de l'image et attribue la géoposition à l'image.

5. Procédé selon l'une des revendications précédentes, **caractérisé par le fait que** la direction de détection optique est alignée à un angle inférieur à 20° par rapport à la direction du faisceau de la lumière directe du soleil.

6. Procédé selon l'une des revendications précédentes, **caractérisé par le fait que** le procédé est mis en oeuvre dans l'hémisphère nord entre le 1er octobre et le 30 avril et entre 10h00 et 15h00.

7. Procédé selon l'une des revendications précédentes, **caractérisé par le fait que** l'aéronef (10) est un véhicule aérien sans pilote (10).

8. Méthode selon l'une des revendications 1 à 7, **caractérisée par le** choix d'un hélicoptère comme aéronef (10), l'hélicoptère comprenant en outre un véhicule sous-marin sans pilote (60), dans laquelle les étapes suivantes sont effectuées après l'identification d'une mine (30) :
u) Déploiement du véhicule sous-marin sans pilote (60) par l'hélicoptère,
v) Approche de la mine (30) par le véhicule sous-marin sans pilote (60),
w) Combattre la mine (30) avec le véhicule sous-marin sans pilote (60).
